# EUROPEAN PATENT APPLICATION

(11) **EP 0 665 394 A1**
(43) Date of publication of application: **02.08.1995**
(21) Application number: 95830019.6
(22) Date of filing: 26.01.1995
(51) Int. Cl.: F16K 11/078

(54) **Improved tightness system for hot and cold water mixer valves**

(30) Priority: 28.01.1994 IT BS940006
(71) Applicant: GALATRON S.r.l., I-46043 Castiglione d/Stiviere (Mantova) (IT)
(72) Inventor: Orlandi, Alessio, I-46043 Castiglione D/Stiviere (Mantova) (IT)
(74) Representative: Manzoni, Alessandro

(57) **Abstract**

A tightness system for hot and cold water mixer valves of the type comprising a fixed disc (11) located on the bottom (10') of a cartridge body and a displaceable disc (12) resting and displaceable on the fixed disc. Between the bottom of the cartridge body and the fixed plate, seals (28,38,48) are provided sunk in seats or channels (29,39,49) without protruding from the edge thereof, projections or ribs (30,40,52) are provided at the base of the said disc and are designed to be introduced into the said seats or channels so as to rest against the said seals, the said projections or ribs having a head surface (30',40',52') located at a lower level with respect to the edge of the said seats or channels.

## Description

The present invention concerns hot and cold water mixer valves for sanitary fittings, and it particularly relates to an improved tightness system for the said valves.

Most hot and cold water mixer valves accommodate flow regulation/mixing units comprising two overlapping discs made in ceramic or in any other similar material, one fixed and the other displaceable on the fixed disc by means of a control lever. The fixed disc is provided with two water inlet openings which communicate with two separate inlet conduits for hot and cold water, and with one outlet opening for the delivery of water towards the spout of the mixer tap accommodating the valve. On the other hand, the displaceable disc is provided with a mixing chamber designed to selectively connect either or both of the water inlet openings with the outlet opening.

The fixed disc is usually located and fixed on the bottom of the cartridge body and rests on seals that may be connected to one another, arranged around the water inlet and outlet openings.

Such seals are designed to provide water-tightness between the body bottom and the base surface of the fixed disc.

They are generally located in seats or in channels of corresponding shape provided in the bottom of the cartridge body, and protrude from the said channels in order to interact with the base surface of the fixed disc. The degree of tightness may be determined and adjusted by higher or lower compression of the disc against the seals, obtained when assembling the valve. Nevertheless, flow rate and pressure of the water flowing through the openings provided in the fixed disc may be considerable in some applications and cause displacement of the seals, which may be partially forced out of the respective seats or channels. The seals may therefore be "pinched" between the disc and the channel edges and consequently be subject to wear beforehand thus causing the loss of the required tightness characteristics. It is therefore necessary to change the said seals and perhaps the whole valve. Additionally, compression against the disc in order to adjust tightness of the seals located on the base thereof may cause the valve elements to strictly compress against one another, thus making valve operation stiffer and more difficult than necessary.

The aim of the present invention is to obviate the said disadvantageous characteristics of mixer valves with a new, original location of the seals and with a specific configuration of the base surface of the fixed disc so as to prevent seals from being forced out of the respective channels even under the most different operating conditions of the valve.

It is an object of the present invention to provide a water tightness system between the body bottom and the fixed disc of a mixing valve, which meets any standard requirements and suitable for all versions different in construction and use, and effective under any operating pressures, no matter how high, located on a level with both water inlet and outlet openings according to the valve installation modalities used.

Another object of the invention is to provide a water tightness system for mixing valves that does not require any strong compression of the fixed disc against the seals in order to ensure tightness; consequently, valve operation always remains extremely smooth and easy since the overlapping elements are never compressed against one another.

According to the invention, the said objects are achieved by a configuration in which the seals between the bottom of the valve body and the fixed disc - which seals may be joined in order to form one only unit - are sunk in the said seats or channels without protruding from the edge thereof, and in which the base of the fixed disc is provided with ribs or projections designed to be introduced into the said seats or channels and to rest on the seals, the said ribs or tongues having a head surface located at lower level with respect to the edge of the seats or channels.

In this way, the seals are contained in their respective seats or channels below the edge thereof and can not possibly be displaced.

Further characteristics of the invention will become apparent from the continuation of the description, made with reference to the accompanying drawings, in which:
Fig. 1 shows - by way of reference - a partial sectional view of a mixer valve with seals between the body bottom and the fixed disc mounted in the traditional way;
Fig. 2 shows a sectional view of a mixer valve like Fig. 1, but with a tightness system according to the invention and in compliance with a first embodiment;
Fig. 3 shows a perspective view of the fixed disc designed to receive the tightness system illustrated in Figure 2;
Fig. 4 shows the base surface of the disc illustrated in Figure 3 viewed from above;
Fig. 5 shows another partial sectional view of a mixer valve accommodating a tightness system according to the invention, but in conformity with another embodiment;
Fig. 6 shows a perspective view of the fixed disc designed to receive the tightness system illustrated in Fig. 5;
Fig. 7 shows the base surface of the disc illustrated in Fig. 6 viewed from above; and
Fig. 8 shows a partial sectional view of a mixer valve accommodating a construction variation of the tightness system illustrated in Fig. 5.

With reference to the above described figures, the reference numeral 10 indicates the whole cartridge body of a mixer valve accommodating valve means comprising two overlapping discs 11, 12 made in ceramic or in any other suitable material.

The lower disc 11 is fixed and adjacent to the bottom 10' of the body 10; the upper disc 12 rests on the fixed disc and may be displaced by means of a control lever 13 provided with a handle - not illustrated in the figures.

As is usual, the fixed disc 11 is provided with two inlet openings 14, 15 for hot and cold water delivered through corresponding connection pipes, and with one outlet opening 16 for the passage of water towards a spout defined by the tap accommodating the valve. The displaceable disc 12 has a mixing chamber 17 which connects either or both of the water inlet openings 14, 15 with the outlet opening.

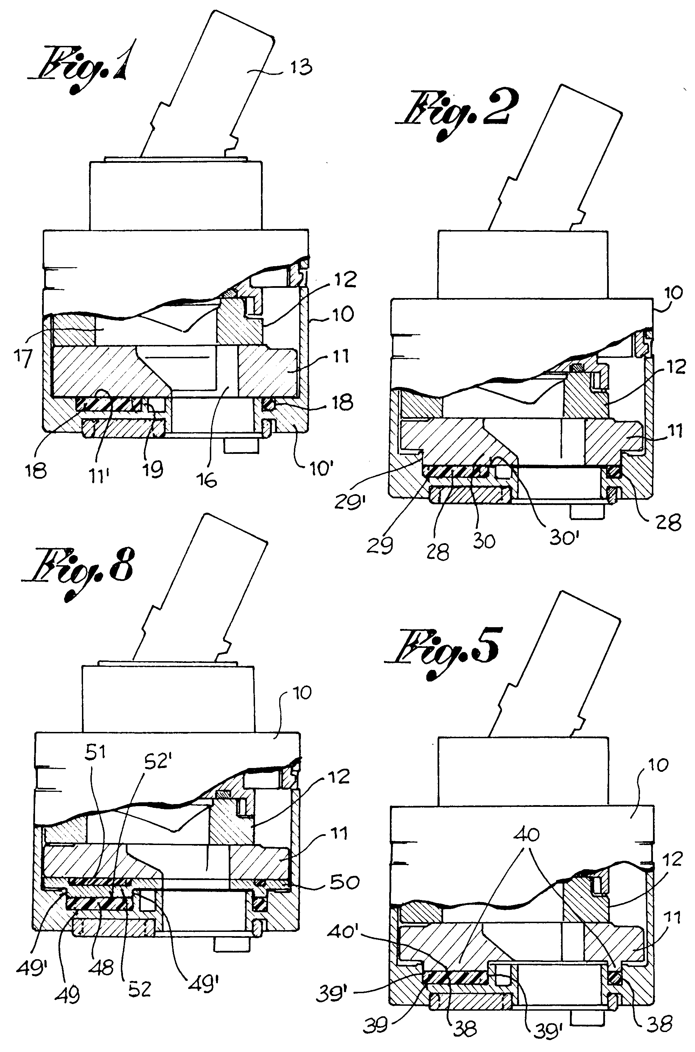

As is usual, between the fixed disc 11 and the bottom 10' of the valve body 10, tightness seals are located on which the disc rests with its base surface 11'. The seals may be joined to one another and, however, they are arranged so as to surround the water inlet openings 14, 15 and the outlet opening 16. According to the known technique and as illustrated in figure 1, the seals 18 are located in seats or channels 19 provided in the bottom 10' of the valve body and protrude from the top of the said channels. The base surface of the disc is flat and rests on the seal portions emerging from the channels 19.

According to the present invention, the seals 28 are sunk in seats or channels without emerging.

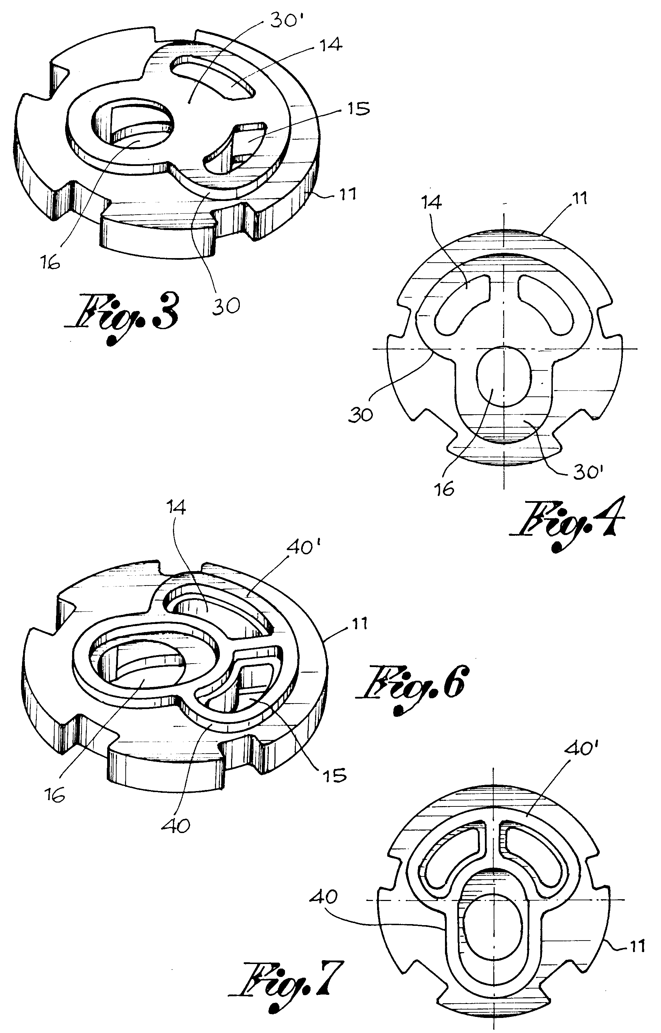

In the embodiment illustrated in figure 2, the seals 28 are located in seats 29 provided on the bottom 10' of the body 10; the said seats have a peripheral wall 29' located on the outer edge thereof, which extends over the seals. The fixed disc 11 has a base projection 30 with an outer profile corresponding to the profile of the peripheral wall 29', and a head surface 30' as illustrated in figures 3 and 4 as well.

The projection 30 may be integral with or adequately fixed to the disc. In any case, the said base projection 30 of the disc is introduced into the enclosure defined by the peripheral wall 29' of the seat 29, and the head surface thereof 30' rests on the seals 28. Thus, the seals 28 can not possibly be forced out, they being contained laterally by the peripheral wall 29' below the edge thereof.

In the embodiment illustrated in figure 5, the tightness seals 38 are located in channels 39 on the bottom 10' of the valve body 10, which are defined both outside and inside by peripheral walls 39' which extend above the seals. The fixed disc 11 has a base rib 40 whose shape and width correspond to shape and width of the channels 39, and with a head surface 40' as illustrated in figures 6 and 7 as well.

The base rib 40 of the disc 11 is introduced into the channels 39, centred between the walls 39' thereof. The head surface 40' of the base rib 40 rests on the seals 38, thereby preventing displacement thereof outwards or inwards, being the seals contained between the peripheral walls 39', below the edge thereof.

The embodiment illustrated in figure 8 is similar to the embodiment in figure 5 as concerns the arrangement of the tightness seals 48 in channels 39 on the bottom 10' of the valve body 10. In fact, the channels 49 are defined, both inwards and outwards, by walls 49' which extend above the seals 48.

On the other hand, the fixed disc 11 is provided with a base plate 50 applied thereto with a tightness seal 51 interposed; the said plate 50 has a base rib 52 on its lower surface whose shape and width correspond to shape and width of the channels 49, with a head surface 52'. The base rib 52 of the plate 50 is introduced into the channels 49, and its head surface 52 rests on the seal 49. Also in this case, the seals 48 are contained and can not possibly be displaced outwards or inwards, they being arranged below the edge of the channels.

## Claims

1. A tightness system for hot and cold water mixer valves of the type comprising a cartridge body (10) including two overlapping discs (11, 12), one fixed (11) located on the bottom (10') of the cartridge body and one displaceable (12), resting and displaceable on the fixed disc by means of a control lever, the fixed disc (11) being provided with separate inlet openings (14, 15) for hot and cold water and with one outlet opening (16), whilst the displaceable disc (12) has a mixing chamber designed to connect the inlet openings with the outlet openings, such connection being associated with the displacement of the displaceable disc, and in which tightness seals are provided around the said inlet and outlet openings (14, 15, 16), between the bottom of the cartridge body and the fixed disc, and may be joined to one another so as to form one only unit, characterized in that the said seals (28, 38, 48) between the bottom of the cartridge body and the fixed disc are sunk in seats or channels (29, 39, 49) and do not protrude from the edge thereof, and in that projections or ribs (30, 40, 52) are provided at the base of the said plate and are designed to be introduced into the said seats or channels so as to rest against the said seals, the said projections or ribs having a head surface (30', 40', 52') located at a lower level with respect to the edge of the said seats or channels.

2. A tightness system as claimed in claim 1, wherein the said seats or channels (29) on the bottom of the cartridge body are provided with a peripheral wall (29') located on the outer edge thereof, which extends above the seals (28), and wherein the fixed disc (11) has a base projection (30) with an outer profile which corresponds to the profile of the peripheral wall (29') of the said seats, the said projection (30) being designed to be introduced into the enclosure defined by the peripheral wall (29') so as to rest against the seals with its head surface (30').

3. A tightness system as claimed in claim 1, wherein the said seats or channels (39) located on the bottom of the cartridge body are defined both inside and outside by peripheral walls (39') which extend above the seals (38), and wherein the fixed disc is provided with a base rib (40) whose shape and width correspond to the shape and width of the said channel (39), the said rib (40) being designed to be introduced into the said channels and to rest against the said seals with its head surface (40').

4. A system as claimed in claim 2 or 3, wherein the base projection or rib (30, 40) is integral with the fixed disc.

5. A system as claimed in claim 2 or 3, wherein the base projection or rib (52) is a separate unit applied to the base of the fixed disc and may be rigidly connected to a plate (50) applied to the base of the said plate with or without a seal interposed (51).
